# FASCICULE DE BREVET EUROPEEN

(11) **EP 1 431 147 B1**
(45) Date de publication et mention de la délivrance du brevet: **23.11.2005**
(21) Numéro de dépôt: 03028929.2
(22) Date de dépôt: 17.12.2003
(51) Int. Cl.: B60T 7/06, F16F 9/04, G05G 5/05

(54) **Pedalier de frein**
Bremspedal
Brake pedal

(30) Priorité: 20.12.2002 FR 0216471
(43) Date de publication de la demande: 23.06.2004
(73) Titulaire: ROBERT BOSCH GMBH, 70442 Stuttgart (DE)
(72) Inventeur: Delage, Jean-Pierre, 94170 Le Perreux sur Marne (FR); Scheil, Guillaume, 75010 Paris (FR); Beylerian, Bruno, 95380 Louvres (FR); Rault, Dominique, 95330 Domont (FR)
(74) Mandataire: Hurwic, Aleksander Wiktor

(56) Documents cités:
- DE-A- 19 822 414
- DE-U- 8 809 962
- US-A- 3 831 923
- US-A- 4 181 834

## Description

La présente invention à pour objet un pédalier de frein perfectionné qui permet d'éviter notamment des retours de pédale trop brutaux lors d'un défreinage brusque.

Normalement dans un véhicule, lorsque le conducteur relâche la pédale de frein, celle-ci est projetée vers le haut par les ressorts de rappel qui en accompagnent la mise en position, ainsi que par le retour d'un équipement de freinage que cette pédale sert à actionner. Notamment lorsque l'équipement de freinage comporte un freinage assisté hydrauliquement à l'aide d'une pompe électrique, une cartouche de fluide sous pression se remplit lors du freinage et exerce, lors du défreinage, une action de remontée sur la pédale. Une telle aptitude est demandée de façon à ce que l'action de freinage soit en correspondance exacte avec la volonté du conducteur, notamment lors d'un défreinage. Sur route glissante un tel défreinage brusque est même une nécessité pour permettre la reprise de contrôle d'un véhicule qui pourrait être en train de déraper.

Cette remonté brusque de la pédale au moment du défreinage présente toutefois deux inconvénients. Premièrement le choc en butée de la pédale en fin de défreinage est bruyant. D'autre part, et en particulier lorsque le pied du conducteur glisse de la pédale de frein, le choc de la pédale contre sa butée peut amener des particules de boue ou des poussières présentes sur la pédale de frein à se projeter dans l'habitacle du véhicule. Pour certains véhicules haut de gamme, une telle situation est jugée inadmissible.

Un autre problème provient de la réalisation déjà existante des pédaliers, et de l'encombrement disponible à l'intérieur du compartiment moteur d'un véhicule. Pour diverses raisons, les constructeurs sont réticents à ce que la forme hors tout du pédalier soit modifiée, de façon à ne pas remettre en question l'organisation des différentes parties du compartiment moteur.

Le but de la présente invention est de résoudre ces problèmes. Ce but est atteint par un amortisseur élastique interposé entre un support du pédalier et une tige de poussée d'une pédale de frein de ce pédalier. L'amortisseur a alors pour effet qu'en fin de course le mouvement de la pédale est ralenti évitant le choc cité ci-dessus. A titre de perfectionnement, de manière à limiter l'encombrement de cet amortisseur, cet amortisseur agit sur un équipage mobile entraîné par la pédale, et qui lui-même actionne un contacteur de fin de course normalement destiné à allumer ou éteindre des feux de signalisation de freinage. En agissant ainsi on peut limiter l'amortissement à la dernière partie de la course de la pédale et obtenir que la taille de l'amortisseur s'inscrive naturellement dans l'espace disponible.

L'invention a donc pour objet un pédalier de frein comportant un support, une pédale articulée sur ce support, et une tige de poussée pour actionner un équipement de freinage, un amortisseur élastique, monté entre la pédale et le support, Ledit amortisseur étant formé par un soufflet, caractérisé en ce que le soufflet comporte un ensemble de troncs de cône creux en caoutchouc, emboîtés les uns dans les autres selon leur axe de tronc de cône, et reliés entre eux par des couronnes.

L'invention sera mieux comprise à la lecture de la description qui suit et à l'examen des figures qui l'accompagnent. Celles-ci ne sont présentées qu'à titre indicatif et nullement limitatif de l'invention des figures montrent :
- Figure 1 : un pédalier de frein selon l'invention ;
- Figure 2 : une représentation détaillée d'un exemple préféré de réalisation de l'amortisseur de l'invention ;
- Figures 3a et 3b : des exemples de réalisation de soufflets devant servir d'amortisseur.

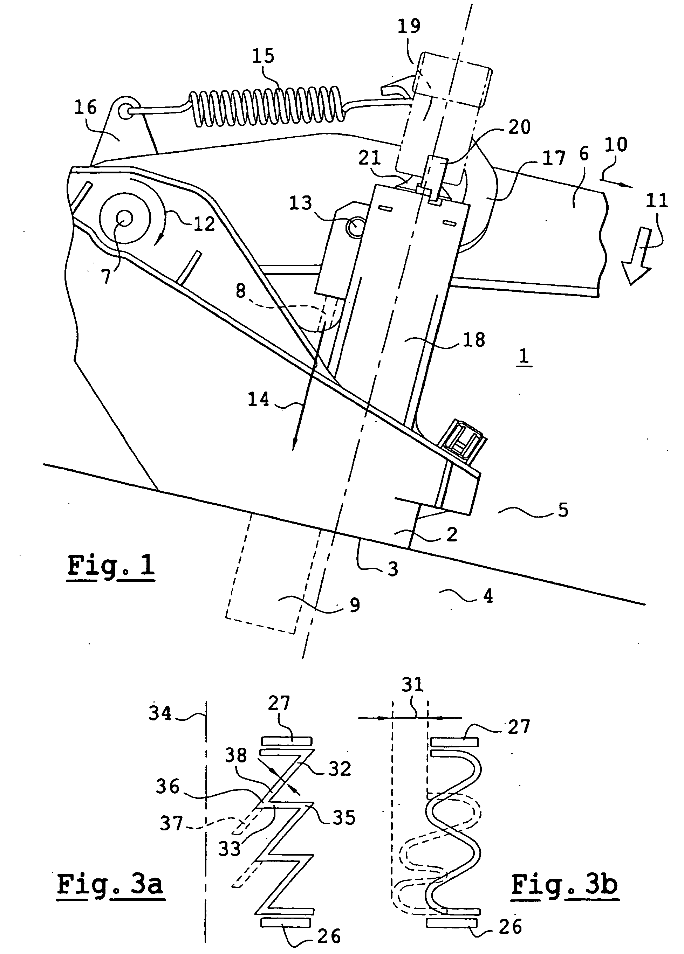

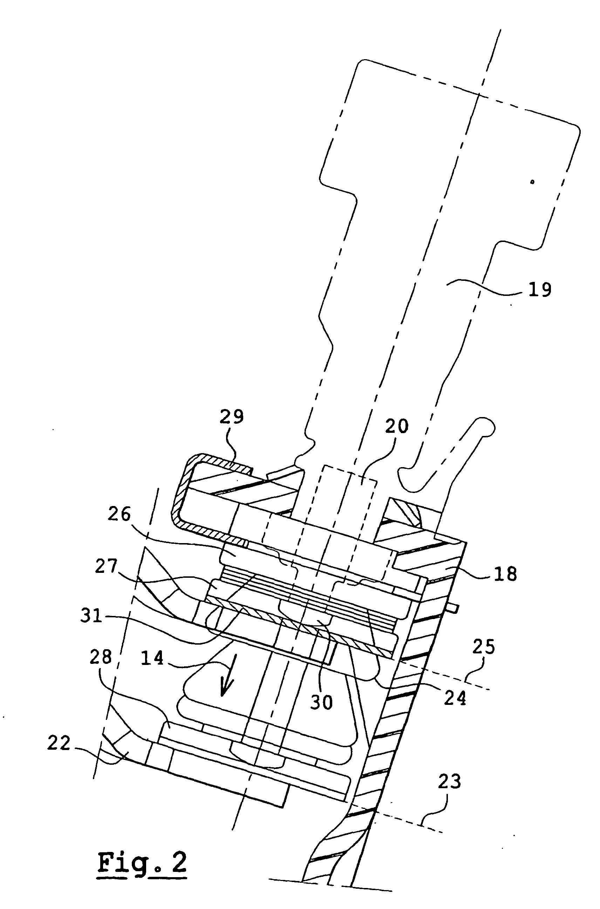

La figure 1 montre un pédalier 1 de frein. Le pédalier 1 comporte un support 2. Le support 2 est normalement fixe et est attaché par des moyens non représentés à un tablier 3, représenté figurativement, séparant un compartiment moteur 4 du véhicule de l'habitacle 5 de ce véhicule. Le pédalier comporte par ailleurs une pédale 6 articulée par un axe 7 sur le support 2. Le pédalier comporte également une tige de poussé 8, elle aussi représenté figurativement, venant actionner un équipement 9 de freinage. Dans un exemple, l'équipement 9 de freinage est un équipement comportant une pompe hydraulique mise en oeuvre par un moteur électrique et disposant d'une cartouche de réserve. Dans ce cas l'équipement 9 de freinage comporte un simulateur. Toutefois l'équipement de freinage 9 pourrait comporter un maître cylindre classique, éventuellement assisté par un dispositif d'assistance pneumatique de freinage.

Le fonctionnement de ce pédalier est le suivant. A une extrémité 10 de la pédale 6, un effort 11 est exercé par le pied d'un conducteur sur un patin solidaire de cette pédale 6. La direction de l'effort 11 force la pédale 6 à tourner autour de l'axe 7 selon une direction 12. Ce faisant, la tige de poussée 8 articulée sur la pédale 6 par un axe 13 subi un déplacement selon une direction 14. Et l'effet de ce déplacement met en oeuvre l'équipement de freinage 9. Lors d'un défreinage, la pédale 6 est amené à remonter, dans une direction opposée à la direction 11, d'une part par un effort inverse de réplique renvoyé par l'équipement de freinage 9, et d'autre part du fait de l'existence d'un ressort de rappel 15 fixé d'une part à une patte 16, fixe, solidaire du support 2 et d'autre part à une patte 17 emmenée par la pédale 6.

Dans un exemple, une patte fixe 18 solidaire du support 2 porte un contacteur de fin de course 19 actionné par un équipage mobile 20, lui-même entraîné par la pédale 6 par rapport à la patte 18. Un signal électrique délivré par ce contacteur 19 et correspondant au déclenchement du freinage, est transmis à des feux de signalisation du véhicule. Dans l'invention, on a tiré parti de la présence de ce contacteur 19 de fin de course et de cet équipage mobile 20 pour insérer à l'endroit de cet équipage mobile un amortisseur 21 de retour de pédale. L'amortisseur 21 a ainsi pour effet, de préférence in fine, de ralentir la remontée de la pédale 6, qui est par ailleurs entraînée par le ressort 15 et la réplique de l'équipement 9. Dans un exemple, on peut ainsi admettre que par rapport à un freinage où la pédale est complètement enfoncée, l'amortisseur 21 du retour de la pédale 6 ne se produit que pendant les 20 derniers pour cents de la course en retour de cette pédale. Il est toutefois possible de prévoir un amortissement qui s'exerce progressivement sur tout le débattement en retour de pédale.

L'amortisseur 21 de l'invention, montré plus précisément sur la figure 2, est interposée entre la pédale 6 et le support 2. L'amortisseur 21 est lié par une extrémité à un côté de l'équipage mobile 20. Le support 2 est lié par la patte 18 à une autre extrémité de l'amortisseur 21.

La figure 2 montre, d'une manière composite, deux états de l'amortisseur 21. Alors qu'une patte 22 liée rigidement à la pédale 6 est en position basse 23, un soufflet 24 servant d'amortisseur 21 est dans une position détendue. Par contre, lorsque la pédale 6 est revenue au repos, lorsque le conducteur n'appuie plus sur le patin de frein, l'équipage mobile 20 a été remonté, entraîné par la patte 22, et a comprimé le soufflet 24 de façon à ce que ce dernier occupe, hors tout, une position 25 plus proche du contacteur de fin de course 19 que ne l'est la position 23. Correspondant à la position 25, on constate que le soufflet est comprimé et donc, au moment du freinage, exerce un effort complémentaire d'assistance de freinage. Dans la position 23, lorsque cette position est extrême, et de manière à éviter un flottement de l'amortisseur 24 celui continue à rester en légère compression, ce qui en facilite la tenue.

Sur la figure 2, on montre que l'amortisseur 21 comporte de préférence deux rondelles 26 et 27 respectivement proche et éloignée du contacteur de fin de course 19. La rondelle 27 est montrée dans deux positions la position 27 et une position 28, lorsque la pédale est sollicitée pour un freinage. La rondelle 27 en appui contre la patte 22. En variante, elle en est solidaire. La rondelle 26 est toujours en appui, notamment par l'intermédiaire d'un caisson 29, contre la patte 18. Donc en définitive, la rondelle 26 est fixe par rapport au support 2. La rondelle 27 est attachée à une extrémité 30 de l'équipage mobile 20. Elle est en appui par ailleurs, par exemple par l'intermédiaire d'une entretoise 31 avec la patte 22 qui est amenée par la pédale 6. La rondelle 27 (ou 28) est donc emmenée par la patte 22. Elle prend donc appuie sur la tige de poussée.

Lorsque la pédale 6 de frein est enfoncée, situation de freinage, le soufflet 21 est déployé. Lorsque la pédale 6 est relâchée, les efforts tant du ressort 15 que de l'équipement 9 tendent à repousser la pédale, et donc la patte 22, et in fine la rondelle 27, et donc comprime le soufflet 21.

Les figures 3a et 3b montrent des réalisations d'un amortisseur.

Il a été envisagé de remplacer le soufflet 21 par une mousse, notamment une mousse à bulles ouvertes. Cette réalisation, tout en procurant un effet d'amortissement, n'est pas tout à fait satisfaisante. En effet, compte tenu de la grande énergie de la pédale 6 au moment ou elle arrive près de sa butée en retour, il est nécessaire de réaliser une mousse à haute densité, en pratique à bulles fines. On s'est aperçu cependant qu'une mousse de ce type, par exemple installée autour de l'équipage mobile 20 pouvait avoir tendance à fluer au moment de la compression, et pouvait avoir tendance à bloquer dans certain cas le retour de la pédale 6 à la position complètement défreinée

On a alors remplacé à titre de perfectionnement la mousse par un soufflet, typiquement par un soufflet comme celui de la figure 3b, dans lequel l'enveloppe du soufflet possède un profil comportant un ensemble de méandre curvilignes sinusoïdaux. Entre une position détendue, montrée en trait plein et une position allant vers la compression, montrée en pointillés on a pu constater que la structure en méandres réguliers, typiquement de type sinusoïdaux, pouvait subir des déflexions amenant notamment au moment de la compression totale certain bords internes du soufflet à ce déplacer d'un écart 31 en direction de l'axe du soufflet.

Par opposition, dans l'invention comme illustré dans la figure 3a on a choisi pour résoudre ce problème de réaliser un soufflet 21 dont le profil possède des dents de scie. Typiquement le soufflet comporte des troncs de cônes tels que 32, reliés entre eux par des couronnes de liaison telles que 33. Le profil du soufflet 32 a de préférence une même épaisseur, à la fois dans les troncs de cônes et dans les couronnes 33. Les plans des couronnes 33 sont avantageusement perpendiculaires à un axe 34 de révolution du soufflet. Cet axe 34 est également un axe de compression ou de déploiement du soufflet. L'axe 34 est sensiblement colinéaire avec l'axe de déplacement de l'équipage mobile 20. Les figures 3a et 3b montrent par ailleurs les profils des couronnes 26 et 27. Les troncs de cônes 32 sont orientés de telle façon que la partie pointue de ces troncs de cônes soit dirigée vers la couronne 26. Dans l'exemple l'amortisseur 21 est fermé par un ensemble de trois troncs de cônes emboîtés les uns dans les autres. De préférence l'amortisseur 21 est en caoutchouc.

A titre de perfectionnement, il est possible de réaliser la liaison entre les troncs de cônes en plaçant les couronnes 33 à une extrémité la plus large 35 d'un tronc cône d'une part, et en position intermédiaire 36 d'un autre tronc de cône d'autre part. Ceci est montré par des excroissances montrés en pointillé 37 au delà des sommets des troncs de cône. En pratique la couronne 33 est donc attachée au tronc de cône 32 entre une partie 37 et une partie 38 de ce dernier.

Le fait de monter l'amortisseur 21 sur le contacteur de feux stop 19 permet que l'amortisseur amortisse le mouvement de la pédale en fin de course de remontée de la pédale 6, lors d'un défreinage. Autrement dit, le mouvement n'est pas du tout ralenti pendant l'essentiel de sa course, il n'est ralenti et amorti qu'à la fin. En effet, le contacteur 19 ne mesure le déplacement relatif de la pédale 6 que sur une partie de ce déplacement.

## Revendications

1. Pédalier (1) de frein comportant un support (2), une pédale (6) articulée (7) sur ce support, et une tige (8) de poussée pour actionner un équipement (9) de freinage, un amortisseur élastique monté entre la pédale et le support, ledit amortisseur étant formé par un soufflet, **caractérisé en ce que** le soufflet comporte un ensemble de troncs (32) de cône creux en caoutchouc, emboîtés les uns dans les autres selon leur axe de tronc de cône, et reliés entre eux par des couronnes.

2. Pédalier selon la revendication 1 **caractérisé en ce que** les couronnes s'étendent dans des plans perpendiculaires à l'axe des troncs de cône.

3. Pédalier selon la revendication 1 ou 2, **caractérisé en ce qu'**un tronc de cône du soufflet comporte des parties coniques (37, 38) situées de part et d'autre par rapport à une couronne de liaison à un autre tronc de cône.

4. Pédalier selon l'une des revendications 1 à 3, **caractérisé en ce que** l'amortisseur élastique comporte deux rondelles (27, 26) prenant appui respectivement sur la tige de poussée et sur le support.

5. Pédalier selon l'une des revendications 1 à 4, **caractérisé en ce que** l'amortisseur élastique est solidaire d'un contacteur (19) de feux stop mesurant sur une partie de la course de la pédale un déplacement relatif entre le support et la pédale afin que l'amortisseur amortisse le mouvement de la pédale en fin de course du mouvement de remontée de la pédale lors d'un défreinage.

6. Pédalier selon l'une des revendications 1 à 5, **caractérisé en ce que**l la pédale est reliée au support par l'intermédiaire d'un ressort (15) de rappel.

7. Pédalier selon l'une des revendications 1 à 6, **caractérisé en ce que** l'équipement de freinage comporte un dispositif d'assistance hydraulique de freinage, ou un simulateur.

## Patentansprüche

1. Bremspedalanordnung (1) mit einem Träger (2), einem an diesem Träger angelenkten (7) Pedal (6) und einer Schubstange (8) zum Betätigen einer Bremseinrichtung (9), einem zwischen dem Pedal und dem Träger angebrachten elastischen Dämpfer, wobei der Dämpfer aus einem Balg besteht, **dadurch gekennzeichnet, dass** das Balg eine Baugruppe aus hohlen Kegelstümpfen (32) aus Gummi aufweist, die entlang ihrer Kegelstumpfachse ineinandergeschoben sind und untereinander durch Kränze verbunden sind.

2. Bremspedalanordnung nach Anspruch 1, **dadurch gekennzeichnet, dass** sich die Kränze in senkrecht zur Achse der Kegelstümpfe verlaufenden Ebenen erstrecken.

3. Bremspedalanordnung nach Anspruch 1 oder 2, **dadurch gekennzeichnet, dass** ein Kegelstumpf des Balgs konische Teile (37, 38) aufweist, die sich zur Verbindung mit einem weiteren Kegelstumpf auf der einen und der anderen Seite eines Kranzes befinden.

4. Bremspedalanordnung nach einem der Ansprüche 1 bis 3, **dadurch gekennzeichnet, dass** der elastische Dämpfer zwei Scheiben (27, 26) aufweist, die an der Schubstange bzw. an dem Träger anliegen.

5. Bremspedalanordnung nach einem der Ansprüche 1 bis 4, **dadurch gekennzeichnet, dass** der elastische Dämpfer mit einem Bremslichtschalter (19) fest verbunden ist, der auf einem Teil des Weges des Pedals eine relative Verschiebung zwischen dem Träger und dem Pedal mißt, damit der Dämpfer die Bewegung des Pedals am Ende des Weges der Rückstellbewegung des Pedals dämpft, wenn die Bremsung gelöst wird.

6. Bremspedalanordnung nach einem der Ansprüche 1 bis 5, **dadurch gekennzeichnet, dass** das Pedal mit dem Träger über eine Rückholfeder (15) verbunden ist.

7. Bremspedalanordnung nach einem der Ansprüche 1 bis 6, **dadurch gekennzeichnet, dass** die Bremsanordnung eine hydraulische Servobremse oder einen Simulator aufweist.

## Claims

1. A brake pedal assembly (1) comprising a support (2), a pedal (6) hinged (7) to said support, and a thrust rod (8) for actuating braking equipment (9), an elastically deformable damper being mounted between the pedal and the support, said damper being formed by a bellows, said brake pedal assembly being **characterized in that** the bellows is made up of a set of rubber hollow truncated cones (32) that are mutually interfitted along their truncated cone axis, and that are interconnected by rings.

2. A brake pedal assembly according to claim 1, **characterized in that** the rings extend in planes that are perpendicular to the axis of the truncated cones.

3. A brake pedal assembly according to claim 1 or claim 2, **characterized in that** a truncated cone of the bellows has conical portions (37, 38) situated on either side of a link ring via which the truncated cone is linked to another cone.

4. A brake pedal assembly according to any one of claims 1 to 3, **characterized in that** the elastically deformable damper comprises two washers (27, 26) bearing respectively against the thrust rod and against the support.

5. A brake pedal assembly according to any one of claims 1 to 4, **characterized in that** the elastically deformable damper is secured to a brake light contactor (19) measuring, over a portion of the stroke of the pedal, relative displacement between the support and the pedal so that the damper damps the movement of the pedal at the end of the return stroke over which the pedal moves back up during brake release.

6. A brake pedal assembly according to any one of claims 1 to 5, **characterized in that** the pedal is connected to the support via a return spring (15).

7. A brake pedal assembly according to any one of claims 1 to 6, **characterized in that** the braking equipment includes a hydraulic braking assistance device, or a simulator.
